# EUROPEAN PATENT SPECIFICATION

(11) **EP 0 787 772 B1**
(45) Date of publication and mention of the grant of the patent: **17.09.2003**
(21) Application number: 97300596.0
(22) Date of filing: 30.01.1997
(51) Int. Cl.: C08L 83/04, C08K 13/02

(54) **Silicone rubber composition**
Siliconkautschukzusammensetzungen
Compositions d'élastomère de silicone

(30) Priority: 30.01.1996 JP 3745796
(43) Date of publication of application: 06.08.1997
(73) Proprietor: Dow Corning Toray Silicone Company Ltd., Ichihara-shi, Chiba Prefecture (JP)
(72) Inventor: Matsushita T., Dow, Corning Toray Silicone Co. Ltd, Ichihara-shi, Chiba Prefecture (JP); Takuman, O., Dow Corning Toray Silicone Co. Inc., Ichihara-shi, Chiba Prefecture (JP)
(74) Representative: Kyle, Diana

(56) References cited:
- EP-A- 0 316 696
- EP-A- 0 645 779
- DE-A- 2 826 221
- JP-A- 59 020 336
- ELIAS, H.-G.: "MAKROMOLEKÜLE" 1992 , HÜTHIG & WEPF , HEIDELBERG; DE XP002044268 vol. 2, pages 345-350 * page 345, paragraph 12.3.2.1 * * paragraph "Aluminiumhydroxid" * * page 345, paragraph 12.3.2.6 *

## Description

This invention introduces silicone rubber compositions that exhibit high mechanical strength and excellent electrical properties, such as tracking resistance, arc resistance, and erosion resistance.

Compositions made by blending aluminum hydroxide powder into silicone rubber compositions are generally known. It is also known that silicone rubber moldings with excellent electrical properties are obtained by the cure of silicone rubber compositions that contain large amounts of aluminum hydroxide powder as described in JP-As 5-12805 and 7-57574. However, those silicone rubber compositions are not suitable for use in some applications due to their poor mechanical strength, such as tensile and tear strengths.

Therefore, the object of the present invention is to provide a silicone rubber composition that has excellent electrical properties, and while even lacking a reinforcing filler, excellent mechanical strengths.

JP-A-59020336 describes the use of aluminum hydroxide as a reinforcing filler for polyolefins. The aluminum hydroxide is obtained by treating its surface with vinyl tris-beta-methoxyethoxy silane.

The present invention provides silicone rubber compositions that exhibit high mechanical strengths and excellent electrical properties, such as tracking resistance, arc resistance, and erosion resistance. These properties are obtained by the incorporation into our compositions of an aluminum hydroxide powder which has been treated with an agent selected from silanes or siloxanes having alkenyl, alkoxy or hydroxy substitution thereon.

The present invention provides a silicone rubber composition comprising:
(A) 100 parts by weight of organopolysiloxane gum, having at least 2 silicon-bonded alkenyl groups in each molecule and the average compositional formula

   RₐSiO_{(4 - a)/2}

   in which R is selected from substituted or unsubstituted monovalent hydrocarbon groups and a has a value from 1.95 to 2.05,
(B) 30 to 200 parts by weight of aluminum hydroxide powder, whose surface has been treated with an agent which is a silane selected from vinyltrimethoxysilane, vinyltriacetoxysilane, allyltrimethoxysilane, butenyltrimethoxysilane and hexenyltrimethoxysilane, or a siloxane oligomer having alkenyl substitution and alkoxy or hydroxy substitution, and
(C) 0.1 to 10 parts by weight of organoperoxide, wherein the composition does not contain a reinforcing filler other than the treated aluminum hydroxide powder.

To explain in greater detail, the organopolysiloxane gum (A) is defined by the average compositional formula RₐSiO_{(4 - a)/2}. R is selected from substituted or unsubstituted monovalent hydrocarbon groups and is exemplified by alkyl groups, such as methyl, ethyl and propyl; alkenyl groups such as vinyl, allyl, butenyl and hexenyl; aryl groups such as phenyl; 3,3,3-trifluoropropyl; 2-phenylethyl; and 2-cyanoethyl. The subscript a has a value from 1.95 to 2.05. Moreover, this component must contain at least 2 silicon-bonded alkenyl groups in each molecule. The alkenyl groups are bonded in terminal, non-terminal positions or at both positions. The molecular structure of this component is straight chain or partially branched straight chain. This component has a degree of polymerization (DP) generally in the range from 1,000 to 20,000. Moreover, this component is a homopolymer, copolymer, or a mixture of such polymers. The units constituting this component are dimethylsiloxy, methylphenylsiloxy, methylvinylsiloxy, and methyl(3,3,3-trifluoropropyl)siloxy. The endblocking groups in this component are trimethylsiloxy, dimethylvinylsiloxy, and methylvinylhydroxysiloxy. The organopolysiloxane gum is exemplified by dimethylvinylsiloxy-endblocked dimethylsiloxane-methylvinylsiloxane copolymer gums, dimethylvinylsiloxy-endblocked dimethylpolysiloxane gums, silanol-endblocked dimethylsiloxane-methylvinylsiloxane copolymer gums, and methylvinylhydroxysiloxy-endblocked dimethylsiloxane-methylvinylsiloxane copolymer gums.

The aluminum hydroxide powder (B) provides the silicone rubber made by cure of our composition with high mechanical strengths and excellent electrical properties. The aluminum hydroxide exhibits a greater reinforcing activity as its particle size declines. Particle sizes in the range from 0.2 to 50 micrometers are generally employed, and particle sizes from 0.2 to 10 micrometers are preferably used. Component (B) is added at 30 to 200 weight parts, in each case per 100 weight parts of component (A). The effects from this component in terms of electrical insulation and mechanical strength are inadequate when it is used at less than 30 weight parts. Contrastingly, the use of more than 200 weight parts causes the cured product to became brittle.

The agent (D) functions to improve the mechanical strengths of our compositions by treating the surface of component (B). Component (D) may be a silane which is selected from vinyltrimethoxysilane, vinyltriacetoxysilane, allyltrimethoxysilane, butenyltrimethoxysilane and hexenyltrimethoxysilane; or silanol or alkoxy-endblocked straight-chain organosiloxane oligomers that contain 25 weight percent or less of alkenyl in the pendant position; and oligomeric siloxane resins containing the RSiO_{3/2} unit (T unit, where R is defined as above) and SiO₂ unit (Q unit) and in which all or part of R is alkenyl.

The organoperoxide (C) is a vulcanizing agent that cures our composition at elevated temperatures. This component is the organoperoxides already generally known for use as vulcanizing agents for silicone rubber compositions, for example, benzoyl peroxide, tert-butyl perbenzoate, 2,4-dichlorobenzoyl peroxide, dicumyl peroxide, and 2,5-dimethyl-2,5-di(tert-butyl-peroxy)hexane.

The composition of the claimed invention comprises the above-described components (A) to (C). However, the treatment of the surface of (B) can take place before component (B) is added to our composition [ingredients (A) plus (C)] or treated in situ by the combination of ingredients (A) to (D).

The components (A) and (C) used in this embodiment are the same as those described above.

While the composition of the present invention comprises the above-described components (A) to (C), insofar as the object of the present invention is not impaired the composition may also contain those additives heretofore known for use with silicone rubber compositions. Such additives include, for example, non-reinforcing fillers, pigments, heat stabilizers, flame retardants, internal mold-release agents, and plasticizers. The non-reinforcing fillers are exemplified by diatomaceous earth, quartz powder, mica, calcium carbonate, zinc carbonate, manganese carbonate, aluminum oxide, and titanium oxide. The pigments are exemplified by carbon black and iron oxide, while the heat stabilizers are exemplified by rare earth oxides, rare earth hydroxides, cerium silanolates, and the cerium salts of fatty acids.

The composition of our claimed invention is prepared simply by mixing the above-described components (A) to (C) to homogeneity using those mixing means heretofore known for use with silicone rubber compositions, for example, kneader mixers, twin-screw continuous compounding extruders, and two-roll mills.

Our composition is cured by heating to a temperature at or above the decomposition temperature of the organoperoxide (C). The subsequent molding method is selected according to the particular purpose from heretofore known molding methods, such as compression molding, extrusion molding, and so forth.

The compositions of this invention have excellent mechanical strengths, such as tensile, and tear strength, and can also pass the anti-tracking test specified by International Electrotechnical Commission (IEC) Publication 587, which is more severe than the JIS method. Thus, the claimed silicone rubber composition is well suited for use in applications that require such properties and in particular for the fabrication of high-voltage electrical insulation for outdoor use.

The invention is further explained below through working examples, in which "parts" means "weight parts", and the values reported for viscosity were measured at 25°C. The mechanical strength values and electrical properties were measured in the examples using the following methods.

Mechanical strength values were measured using the methods of JIS K 6301, "Physical Testing Methods for Vulcanized Rubber". Specifically, the heat-curing silicone rubber composition was compression molded by heating for 10 minutes at 150°C to give a 2 mm-thick silicone rubber sheet. The mechanical strength values of this silicone rubber sheet were also measured by the methods of JIS K 6301.

Electrical properties were measured by an inclined plane anti-tracking test according to the method stipulated in IEC Publication 587 using a model HAT-520 from Hitachi™ Kasei Kogyo Kabushiki Kaisha, Japan. The test voltage was 3.5 kV. The evaluation A referenced in the appended tables refers to the time in minutes required until the current flowing in a high-voltage circuit, passing through the test specimen, exceeded 60 mA. The evaluation B of the tables refers to the time in minutes for tracking to reach a mark placed on the surface of the test specimen at a position 25 mm from the lower electrode.

Example 1. Silicone rubber base compounds were prepared by mixing the following to homogeneity in a kneader mixer: 100 weight parts of dimethylvinylsiloxy-endblocked dimethylsiloxane-methylvinylsiloxane copolymer gum, containing 99.87 mole% of dimethylsiloxy units and 0.13 mole% of methylvinylsiloxy units, and an aluminum hydroxide powder whose surface had been treated with vinyltrimethoxysilane (Higilite™ H42STV from Showa™ Denko Kabushiki Kaisha, Japan, average particle size = 1 micrometer), wherein the aluminum hydroxide powder was added in the amount reported in Table 1.

As a catalyst 0.8 weight part of a 50 weight% silicone oil paste of 2,5-dimethyl-2,5-di(tert-butylperoxy)hexane was mixed to homogeneity on a two-roll mill into 100 weight parts of each of the silicone rubber base compounds prepared above, to give corresponding curable silicone rubber compositions. The mechanical strength values and electrical properties of the resulting cured silicone rubber compositions were measured and are reported in Table 1.

Comparative Example 1. Curable silicone rubber compositions were prepared as in Example 1, but in this case using an untreated aluminum hydroxide powder.

The mechanical strength values and electrical properties of the cured silicone rubber compositions were measured as in Example 1 and the results are also reported in Table 1. These results confirm that our silicone rubber compositions had both high tensile and tear strengths; thus providing excellent mechanical strengths.

**Table 1**

| | Example 1 | | Comparative Example 1 | |
|---|---|---|---|---|
| Al (OH)₃ addition (parts) | 100 | 150 | 100 | 150 |
| durometer (JIS A) | 45 | 65 | 40 | 57 |
| tensile strength (MPa) | 4.2 | 5.1 | 1.8 | 1.7 |
| elongation (%) | 235 | 200 | 350 | 300 |
| tear strength (A) (N/mm) | 7 | 13 | 5 | 8 |
| electrical properties | | | | |
| evaluation A (min) | - | ≥360 | - | ≥360 |
| evaluation B (min) | - | ≥360 | - | ≥360 |

Example 2. A silicone rubber base compound was prepared by mixing the following to homogeneity in a kneader mixer: 100 weight parts of dimethylvinylsiloxy-endblocked dimethylsiloxane-methylvinylsiloxane copolymer gum, containing 99.87 mole% of dimethylsiloxy units and 0.13 mole% of methylvinylsiloxy units, 150 weight parts of an untreated aluminum hydroxide powder (Higilite™ H42M from Showa™ Denko Kabushiki Kaisha, Japan, average particle size = 1 micrometer), and 5 weight parts of a silanol-endblocked dimethylsiloxane-methylvinylsiloxane copolymer oligomer with a viscosity of 30 mPa·s and a vinyl content of 10 weight%. Into 100 weight parts of this silicone rubber base compound were mixed 30 parts of dimethyldichlorosilane-treated fumed silica (specific surface area = 120 m²/g, Aerosil™ R972 from Nippon Aerosil™ Co., Ltd., Japan) to homogeneity to give a silicone rubber base compound.

Into 100 parts of the silicone rubber base compound were mixed 0.8 part of a 50 weight% silicone oil paste of 2,5-dimethyl-2,5-di(tert-butylperoxy)hexane to homogeneity on a two-roll mill to provide a catalyst and to give a curable silicone rubber composition. The mechanical strengths and electrical properties of the cured silicone rubber composition were measured and are reported in Table 2.

Comparative Example 2. A silicone rubber base compound was prepared as in Example 2, but without the use of the silanol-terminated dimethylsiloxane-methylvinylsiloxane copolymer oligomer. A curable silicone rubber composition was then prepared from this comparative silicone rubber base compound by the procedure of Example 2.

The mechanical strengths and electrical properties of the cured silicone rubber composition were then measured as in Example 2 and the results are reported in Table 2. The results of Table 2 confirm that the cured silicone rubber compositions of this invention had higher tensile and tear strengths, thus producing an excellent mechanical strength.

**Table 2**

| | Example 2 | Comparative Example 2 |
|---|---|---|
| Al (OH)₃ addition (parts) | 150 | 150 |
| treated silica | | |
| addition (parts) | 30 | 30 |
| durometer (JIS A) | 73 | 74 |
| tensile strength (MPa) | 4.5 | 2.4 |
| elongation (%) | 380 | 400 |
| tear strength (A) (N/mm) | 22 | 15 |
| electrical properties | | |
| evaluation A (min) | ≥360 | ≥360 |
| evaluation B (min) | ≥360 | ≥360 |

Example 3. 3 parts of vinyltrimethoxysilane were mixed to homogeneity on a two-roll mill into 100 parts of a silicone rubber base compound whose preparation is described in Comparative Example 1. This mixture was then heated for 24 hours at 100°C. After cooling, 0.4 part of 2,5-dimethyl-2,5-di(tert-butylperoxy)hexane was blended in to yield a curable silicone rubber composition. The mechanical strengths and electrical properties of the cured silicone rubber composition were measured as in Example 1 and these results are in Table 3.

**Table 3**

| | Example 3 |
|---|---|
| treatment agent | vinyltrimethoxysilane |
| treatment method | post-treatment |
| durometer (JIS A) | 62 |
| tensile strength (MPa) | 4.8 |
| elongation (%) | 320 |
| tear strength (A) (N/mm) | 15 |
| electrical properties | |
| evaluation A (min) | ≥360 |
| evaluation B (min) | ≥360 |

## Claims

1. A silicone rubber composition comprising
(A) 100 parts by weight of organopolysiloxane gum having at least 2 silicon-bonded alkenyl groups in each molecule and the average compositional formula
RₐSiO_{(4 - a)/2}
in which R is selected from substituted or unsubstituted monovalent hydrocarbon groups and a has a value from 1.95 to 2.05,
(B) 300 to 200 parts by weight of aluminum hydroxide powder whose surface has been treated with an agent which is a silane selected from vinyltrimethoxysilane, vinyltriacetoxysilane, allyltrimethoxysilane, butenyltrimethoxysilane and hexenyltrimethoxysilane, or a siloxane oligomer having alkenyl substitution and alkoxy or hydroxy substitution, and
(C) 0.1 to 10 parts by weight of organoperoxide, wherein the composition does not contain a reinforcing filler other than the treated aluminum hydroxide powder.

2. The composition of Claim 1, where component (B) is treated in situ by combining 10 to 300 weight parts of an untreated aluminum hydroxide powder with (D) 0.1 to 30 parts by weight of an agent which is a silane selected from vinyltrimethoxysilane, vinyltriacetoxysilane, allyltrimethoxysilane, butenyltrimethoxysilane and hexenyltrimethoxysilane, or a siloxane oligomer having alkenyl and alkoxy or hydroxy substitution.

3. The composition of Claim 1, where the organopolysiloxane gum (A) is selected from the group consisting of dimethylvinylsiloxy-endblocked dimethylsiloxane-methylvinylsiloxane copolymer, dimethylvinylsiloxy-endblocked dimethylpolysiloxane, silanol-endblocked dimethylsiloxane-methylvinylsiloxane copolymer, and methylvinylhydroxysiloxy-endblocked dimethylsiloxane-methylvinylsiloxane copolymer.

4. The composition of Claim 1, where the aluminum hydroxide powder (B) has a particle size in the range of 0.2 to 50 micrometers.

5. The composition of Claim 1, where the agent is an organosiloxane oligomer having alkenyl substitution and alkoxy or hydroxy substitution, and which contains 25 weight percent or less of pendant alkenyl substitution.

6. Use of a silicone rubber composition in accordance with any preceding claim in the fabrication of high-voltage electrical insulation.

## Patentansprüche

1. Siliconkautschukzusammensetzung, enthaltend
(A) 100 Gewichtsteile Organopolysiloxanharz mit mindesten zwei siliciumgebundenen Alkenylgruppen in jedem Molekül und der mittleren Zusammensetzungsformel
RₐSiO_{(4-a)/2},
in welcher R aus substituierten oder unsubstituierten monovalenten Kohlenwasserstoffgruppen ausgewählt ist und a einen Wert von 1,95 bis 2,05 aufweist,
(B) 30 bis 200 Gewichtsteile Aluminiumhydroxidpulver, dessen Oberfläche mit einem Mittel behandelt worden ist, welches ein Silan, ausgewählt aus Vinyltrimethoxysilan, Vinyltriacetoxysilan, Allyltrimethoxysilan, Butenyltrimethoxysilan und Hexenyltrimethoxysilan, oder ein Siloxanoligomer mit Alkenylsubstitution und Alkoxy- oder Hydroxysubstitution ist, und
(C) 0,1 bis 10 Gewichtsteile Organoperoxid,
wobei die Zusammensetzung keinen verstärkenden Füllstoff, außer dem behandelten Aluminiumhydroxidpulver, enthält.

2. Zusammensetzung nach Anspruch 1, worin Komponente (B) in situ durch Vereinigen von 10 bis 300 Gewichtsteilen eines unbehandelten Aluminiumhydroxidpulvers mit
(D) 0,1 bis 30 Gewichtsteilen eines Mittels, welches ein Silan, ausgewählt aus Vinyltrimethoxysilan, Vinyltriacetoxysilan, Allyltrimethoxysilan, Butenyltrimethoxysilan und Hexenyltrimethoxysilan, oder ein Siloxanoligomer mit Alkenyl- und Alkoxy- oder Hydroxysubstitution ist,
behandelt ist.

3. Zusammensetzung nach Anspruch 1, worin das Organopolysiloxanharz (A) ausgewählt ist aus der Gruppe bestehend aus dimethylvinylsiloxyendblockiertem Dimethylsiloxan-Methylvinylsiloxan-Copolymer, dimethylvinylsiloxyendblockiertem Dimethylpolysiloxan, silanolendblockiertem Dimethylsiloxan-Methylvinylsiloxan-Copolymer und methylvinylhydroxysiloxyendblockiertem Dimethylsiloxan-Methylvinylsiloxan-Copolymer.

4. Zusammensetzung nach Anspruch 1, worin das Aluminiumhydroxidpulver (B) eine Teilchengröße im Bereich von 0,2 bis 50 µm aufweist.

5. Zusammensetzung nach Anspruch 1, worin das Mittel ein Organosiloxanoligomer mit Alkenylsubstitution und Alkoxy- oder Hydroxysubstitution ist und das 25 Gew% oder weniger seitenständige Alkenylsubstition enthält.

6. Verwendung einer Siliconkautschukzusammensetzung gemäß einem der vorstehenden Ansprüche bei der Herstellung von elektrischer Isolierung für Hochspannungsanwendungen.

## Revendications

1. Composition d'élastomère de silicone comprenant
(A) 100 parties en poids de gomme d'organopolysiloxane possédant au moins 2 groupes alcényle liés au silicium dans chaque molécule et répondant à la formule de composition moyenne
RₐSIO_{(4-a)/2}
dans laquelle R est choisi parmi les groupes hydrocarbonés monovalents substitués ou non substitués et a a une valeur allant de 1,95 à 2,05,
(B) 30 à 200 parties en poids de poudre d'hydroxyde d'aluminium dont la surface a été traitée avec un agent qui est un silane choisi parmi les vinyltriméthoxysilane, vinyltriacétoxysilane, allyltriméthoxysilane, butényltriméthoxysilane et hexényltriméthoxysilane, ou un oligomère de siloxane ayant une substitution alcényle et une substitution alcoxy ou hydroxy, et
(C) 0,1 à 10 parties en poids d'organoperoxyde, la composition ne contenant pas de charge de renforcement autre que la poudre d'hydroxyde d'aluminium traitée.

2. Composition selon la revendication 1, dans laquelle le composant (B) est traité in-situ en combinant 10 à 300 parties en poids d'une poudre d'hydroxyde d'aluminium non traitée avec (D) 0,1 à 30 parties en poids d'un agent qui est un silane choisi parmi les vinyltriméthoxysilane, vinyltriacétoxysilane, allyltriméthoxysilane, butényltriméthoxysilane et hexényltriméthoxysilane, ou un oligomère de siloxane ayant une substitution alcényle et alcoxy ou hydroxy.

3. Composition selon la revendication 1, dans laquelle la gomme d'organopolysiloxane (A) est choisie dans le groupe constitué d'un copolymère diméthylsiloxané méthylvinylsiloxane à extrémité bloquée par un groupe diméthylvinylsilyloxy, de diméthylpolysiloxane à extrémité bloquée par un groupe diméthylvinylsilyloxy, d'un copolymère diméthylsiloxané méthylvinylsiloxane à extrémité bloquée par un groupe silanol et d'un copolymère diméthylsiloxané méthylvinylsiloxane à extrémité bloquée par un groupe méthylvinylhydroxysilyloxy.

4. Composition selon la revendication 1, dans laquelle la poudre d'hydroxyde d'aluminium (B) a une taille de particules dans la gamme de 0,2 à 50 micromètres.

5. Composition selon la revendication 1, dans laquelle l'agent est un oligomère d'organosiloxane ayant une substitution alcényle et une substitution alcoxy ou hydroxy et qui contient 25 pour cent en poids ou moins d'une substitution alcényle latérale.

6. Utilisation d'une composition d'élastomère de silicone selon l'une quelconque des revendications précédentes dans la fabrication d'une isolation électrique contre les hautes tensions.
